# EUROPEAN PATENT APPLICATION

(11) **EP 1 675 275 A2**
(43) Date of publication of application: **28.06.2006**
(21) Application number: 05027675.7
(22) Date of filing: 16.12.2005
(51) Int. Cl.: H04B 7/005

(54) **Apparatus for limiting maximum transmission power and method thereof**

(30) Priority: 21.12.2004 KR 2004109742
(71) Applicant: LG Electronics Inc., Yongdungpo-Gu Seoul (KR)
(72) Inventor: Choi, Doo-Sung, Gwangmyeong Geyonggi-Do (KR)
(74) Representative: Katérle, Axel

(57) **Abstract**

An apparatus for limiting the maximum output of each transmission channel of a mobile communication terminal and a method thereof are provided. The method includes detecting output powers of signals, calculating differences between the detected output powers and output powers previously stored in a terminal when the detected output powers deviate from the range of a threshold value, multiplying a predetermined number by the calculated difference values to store the resultant values, and transmitting signals using the stored power values. Therefore, output power of each transmission channel is controlled so that it is possible to provide improved communication quality without interference.

## Description

### BACKGROUND OF THE INVENTION

### 1. Field of the Invention

The present invention relates to a mobile communication terminal, and more particularly, to an apparatus for limiting the maximum output of each channel of a mobile communication terminal and a method thereof.

### 2. Description of the Background Art

In general, a mobile communication terminal based on a code division multiple access (CDMA) method includes 16 channels in accordance with a 3^{rd} generation partnership project (3GPP) specification. The mobile communication terminal (hereinafter, referred to as a terminal) includes a power table having 16 power levels for the 16 channels and a lookup table that illustrates analog to digital converter (ADC) values corresponding to the power levels. For example, when 9739 transmission channels exist in the 3GPP, the power table includes the 16 power levels from 6.75dBm to 26.67dBm that are different from each other by 1.33dBm and the ADC values corresponding to the respective power levels (for example, 96 when the power level is 6.75dBm and 100 when the power level is 8.08dBm. Also, the power corresponding to 23.5dBm in the power table of the 9739 channels is referred to as reference power. The mobile communication terminal (hereinafter, referred to as a terminal) controls the maximum output power using the reference power. The output power larger than the maximum output power limited as described above operates as interference for another terminal or system to deteriorate the communication quality of another terminal. The output power smaller than the maximum output power reduces the service area of the terminal to deteriorate the communication quality of the terminal.

In order to prevent communication quality from deteriorating, a conventional terminal controls the resistance value and the capacitor value of a transmission stage for the maximum output power characteristic of each channel of hardware to set the maximum output power of each channel as a uniform value of a limited level and to set an optimal matching value so that the 3GPP specification is satisfied and that enough margin is secured.

According to the above-described conventional art, since the resistance and capacitor of the transmission stage are directly controlled to limit the maximum output power, the level of the maximum output power changes in accordance with change in wireless environment so that it is difficult to secure enough margin required by the 3GPP specification.

### BRIEF DESCRIPTION OF THE INVENTION

Therefore, an object of the present invention is to provide communication quality without interference to a user by controlling an output power value of each transmission channel to limit the maximum output power of each channel.

In order to achieve the above object, there is provided a mobile communication terminal, comprising a detector for detecting output powers of signals, a processor for controlling power by calculating differences between the detected output powers and output powers previously stored in a terminal, and a radio frequency (RF) transmitter for transmitting signals using the controlled power. Also, in order to achieve the above object, there is provided a method of limiting the maximum output of each transmission channel of a mobile communication terminal, the method comprising detecting output powers of signals, calculating differences between the detected output powers and output powers previously stored in a terminal and thereby controlling power, and transmitting signals using the controlled power.

The range of the threshold value is preferably set to vary with each terminal.

The power regulator preferablyh calculates differences between the detected output powers and the output powers stored in the terminal and multiplies a predetermined number by the calculated values to store the resultant values in a storage device.

Preferably, the storage device comprises an
NV_WCDMA_TX_LIM_VS_FREQ_I.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating an apparatus for limiting the maximum output of each transmission channel of a mobile communication terminal according to the present invention; and
FIG. 2 is a flowchart illustrating a method of limiting the maximum output of each transmission channel of the mobile communication terminal according to the present invention.

### DETAILED DESCRIPTION OF PREFERRED EMBODIMENTS

Preferred embodiments of the present invention will be described in detail with reference to the attached drawings.

The present invention is for improving communication quality by controlling output power based on the maximum output power corresponding to the reference power of a transmission channel of a terminal.

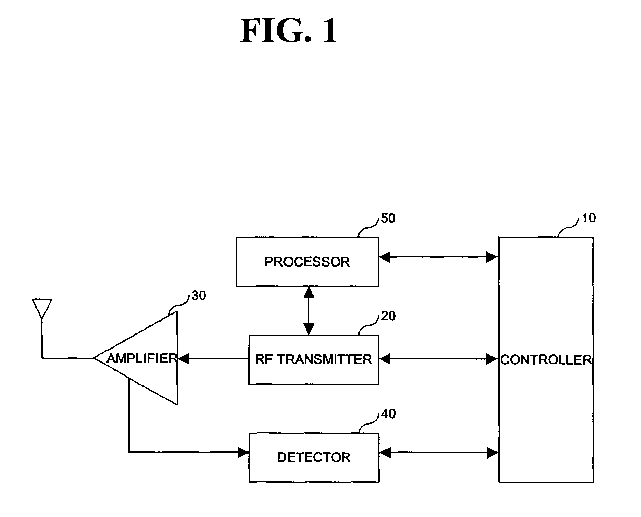

FIG. 1 is a block diagram illustrating an apparatus for limiting the maximum output of each transmission channel of a mobile communication terminal according to the present invention.

As illustrated in FIG. 1, the apparatus for limiting the maximum output of each transmission channel of the mobile communication terminal according to the present invention includes a radio frequency (RF) transmitter 20 for loading an analog signal received through a controller 10 on an RF carrier to transmit the analog signal to an amplifier, an amplifier 30 for amplifying the power of the received analog signal to wireless transmit the power through an antenna, a detector 40 for detecting the power amplified by the amplifier 30 to transmit the detected result to the controller 10, a processor 50 for controlling the power using the transmitted result, and a controller 10 for transmitting RF signals in accordance with the processed power to the RF transmitter 20 again and for entirely controlling the apparatus.

Hereinafter, the operation of the apparatus for limiting the maximum output of each transmission channel of a mobile communication terminal according to the present invention will be described as follows.

The RF transmitter 20 sets a frequency band of a transmission channel to vary in order to transmit the RF signals received from the controller 10 and transmits the RF signals corresponding to the respective channels to the amplifier 30 in accordance with the set frequency. The amplifier 30 amplifies the RF signals received from the RF transmitter 20 with high output power and wireless transmits the RF signals through an antenna.

The detector 40 monitors the amplifier 30 and, when the power value output from the amplifier 30 deviates from the range of a predetermined threshold value that allows an error range, extracts the output power value to transmit the power value to the controller 10. The controller 10 that received the extracted power value converts the power of the extracted power value into digital values, and then transmits the converted digital values to the processor 50.

The processor 50 controls the maximum output power using the digital values transmitted by the controller 10, that is, analogue to digital converter (ADC) values and ADC values of a lookup table (that is, a table that illustrates ADC values) previously stored in a storage device (not shown) of a terminal. For example, in the case where the ADC value of the previously stored lookup table is 154, when the powe value of the power table corresponding to 154 is 23.5dBm (223.9mW) and the power vlaue corresponding to 154 among the converted ADC values is 23.7dBm (234.4mW), the processor 50 multiplies 12 by the value obtained by subtracting 23.7dBm from the power value 23.5dBm of the power table, that is, 0.2dBm (10.5mW), then converts the resultant value (2.4dBm) into an automatic gain control (AGC) unit, and then stores the resultant value (2.4dBm) in the corresponding register region (e.g. NV_WCDMA_TX_LIM_VS_FREQ_I) of the flash memory of the terminal. The above-described storage process is performed at each transmission channel.

The reason why the resultant value is converted into the AGC unit is as follows. Whereas a general unit for transmission output is dB (a relative power unit) or dBm (absolute output unit), the mobile terminal is implemented by software so as to recognize a transmission output value as an AGC, a unit for converting a difference value of a maximum output according to each transmission channel. The dBm unit is multiplied by 12 in order to be converted into the AGC unit. That is, the difference value, 0.2dBm is multiplied by 12 thereby to be 2.4 AGC. Then, the integer of the 2.4AGC, that is, 2 is stored in the corresonding register region of the flash memory of the mobile terminal. The above-process is applied to all of the ADC values of the lookup table and the resultant values controlled as described above are stored in the corresponding register regions (e.g., NV_WCDMA_TX_LIM_VS_FREQ_I).

The RF transmitter 20 transmits the RF signals to the amplifier 30 using a value obtained by subtracting the stored difference value from the output power value corresponding to a basis power under the control of the controller 10. The amplifier 30 transmits the RF signals in accordance with the controlled power levels.

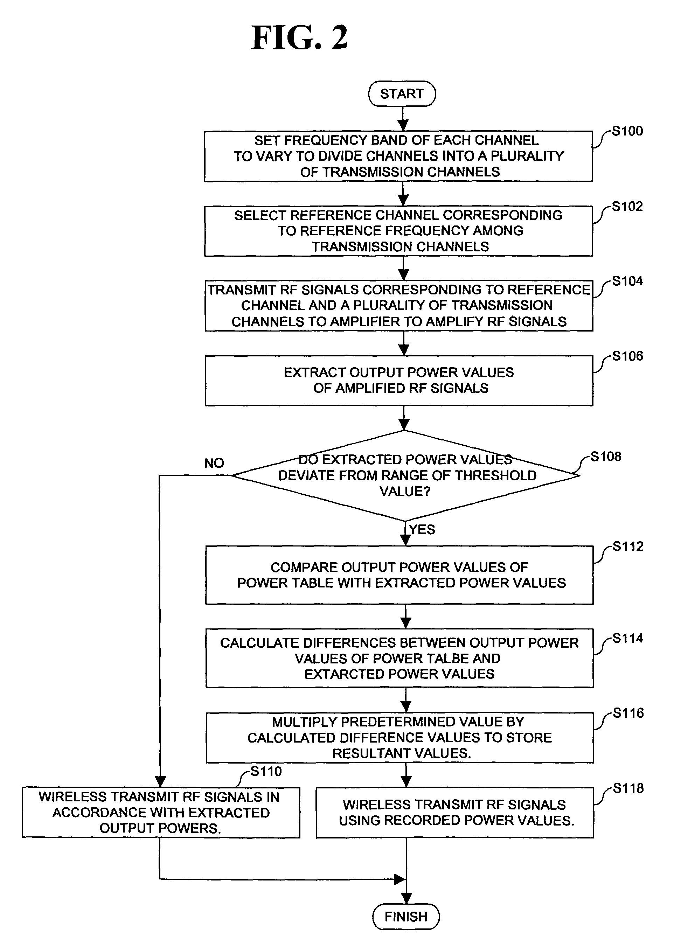

FIG. 2 is a flowchart illustrating a method of limiting the maximum output of each transmission channel of a mobile communication terminal according to one embodiment of the present invention.

In general, when the mobile communication terminal is in a minimum output amplification state, the terminal is set as "state 0". When the mobile communication terminal is in a maximum output amplification state, the terminal is set as "state 1".

The "state 0" means that no obstacles exist when communication is performed by minimum power. The "state 1" means that obstacles exist so that maximum power is required.

Hereinafter, referring to FIG. 2, the method of limiting the maximum output of each channel of the mobile communication terminal according to one embodiment of the present invention will be described in detail.

First, according to the present invention, it is assumed that the mobile communication terminal transmits voice, images, and data through the 9739 channels of the 3GPP in a state where the maximum output amplification state is set as "state 1".

The data to be transmitted are transmitted to the RF transmitter 20 through the controller 10. The RF transmitter 20 sets a frequency band of each of the 9739 channels to vary with output power and the channels are divided into 16 transmission channels in order to transmit the data to the amplifier 30 (S100). When the 16 transmission channels are obtained, the RF transmitter 20 selects a transmission channel (hereinafter, referred to as a reference channel) corresponding to reference power among the 16 transmission channels each of which varies with output power (S102). When the reference channel is selected, the RF transmitter 20 transmits the RF signals corresponding to the reference channel and the 15 transmission channels to the amplifier 30 in order to transmit the data (S104).

The transmitted RF signals are amplified in accordance with the output power value corresponding to the reference channel and the output power values of the amplified RF signals of the transmission channels are detected by the detector 40 (S106). When the output power values are detected, the detector 40 checks whether the detected output power values deviate from a predetermined threshold value that allows an error and wireless transmits the RF signals in accordance with the detected output powers through an antenna when it is determined that the detected output power values does not deviate from the range, that is, the detected output power is within an allowable error range (S108 and S110).

When it is determined that the output power values of the detected transmission channels deviate from the range, the processor 50 compares the ouput power value of the power table corresponding to the ADC value with the power value corresponding to the ADC value among the detected transmission channels using the ADC value of the lookup table corresponding to the reference power of the transmission channels (S112). At this time, the power value of the power table is based on the power value of the reference channel. However, the power value of the power table varies with power required to perform a call in consideration of a hardware error generated at the time of fabricating the mobile terminal.

When difference is generated as a result of comparing the two power values, differences between the output power values of the 16 transmission channels and the output power values of the transmission channels corresponding to the output power of the power table that deviates from the range of the threahold value are calculated (S114). After multiplying a predetermined value (for example, 12) by the calculated difference values and thereby converting into an AGC unit, the integer of the converted AGC value is recorded in the corresponding register region and the RF signals are wirelessly transmitted through the antenna using a power value obtained by subtractig the stored difference value from an output power value corresponding to a basis power (S116 and S118). The processes (S108 to S118) are performed at each transmission channel.

As described above, according to the present invention, the output power value of each transmission channel is controlled to limit the maximum output power of each channel so that it is possible to secure enough margin for the maximum output power of each channel required by the 3GPP specification and to maintain the maximum output power of each channel uniform. Therefore, it is possible to improve the communication quality of the terminal.

Also, the method of limiting the maximum output of each transmission channel of the mobile communication terminal according to the present invention is applied after the terminal is manufactured. According to the method, it is possible to recover errors generated during the H/W manufacturing of the terminal and to supply proper output power when communication is actually performed so that it is possible to prevent output power from operating as interference to another terminal and system and to thus improve communication quality.

The invention being thus described, it will be obvious that the same may be varied in many ways. Such variations are not to be regarded as a departure from the spirit and scope of the invention, and all such modifications as would be obvious to one skilled in the art are intended to be comprised within the scope of the following claims.

## Claims

1. A mobile communication terminal, comprising:
a detector for detecting output powers of signals;
a processor for controlling power by calculating differences between the detected output powers and output powers previously stored in a terminal; and
a radio frequency (RF) transmitter for transmitting signals using the controlled power.

2. The mobile communication terminal of claim 1, further comprising a controller for multiplying the calculated difference value by a certain value and then storing the resultant value in a storing unit.

3. The mobile communication terminal of claim 1, wherein the processor controls power by subtracting a difference value between an output power detected according to each transmission channel and an output power stored in the mobile terminal from the detected output power.

4. The mobile communication terminal of claim 1, further comprising an amplifier for amplifying RF signals output through the RF transmitter and then wirelessly transmitting the RF signals through an antenna.

5. The mobile communication terminal of claim 1, further comprising a storing unit for storing the detected output power.

6. The mobile communication terminal of claim 5, wherein the storing unit stores a value which has been converted into a digital value from the detected output power.

7. The mobile communication terminal of claim 1, wherein the detector comprises a module for checking whether the detected output powers deviate from the threshold value.

8. The mobile communication terminal of claim 7, wherein the threshold value is set differently according to each terminal.

9. The mobile communication terminal of claim 2, wherein the controller converts the detected output powers into digital values.

10. The mobile communication terminal of claim 1, wherein the controller controls an output power to be a value obtained by subtracting an output power stored in the mobile terminal from the detected output power.

11. The mobile communication terminal of claim 1, wherein the processor multiplies the calculated difference value by a certain value, and then stores the resultant value into a storage device.

12. The mobile communication terminal of claim 11, wherein the storage device comprises a register region.

13. A method of limiting an output of a mobile communication terminal, the method comprising:
detecting output powers of signals;
calculating differences between the detected output powers and output powers previously stored in a terminal and thereby controlling power; and
transmitting signals using the controlled power.

14. The method of claim 13, wherein the controlling is performed by subtracting a difference between an output power detected according to each transmission channel and an output power stored in the mobile terminal from the detected output power.

15. The method of claim 13, wherein the controlling comprises multiplying the calculated difference value by a certain number, and then storing the resultant value into a storage device.

16. The method of claim 13, wherein the controlling is performed by controlling an output power to be a value obtained by subtracting an output power stored in the mobile terminal from the detected output power.

17. The method of claim 13, wherein the transmitting comprises amplifying RF signals output through the RF transmitter and then wirelessly transmitting the RF signals through an antenna.

18. The method of claim 13, wherein the detecting comprises checking whether the detected output powers deviate from a range of a threshold value.

19. The method of claim 18, wherein the range of a threshold value is differently set according to each mobile terminal.

20. The method of claim 15, wherein the storing comprises converting the detected output powers into digital values, calculating a difference value between the converted digital value and a digital value of an output power stored in the mobile terminal, then multiplying the difference value by a certain value, and then storing the difference value in a storage device.

21. The method of claim 15, wherein the storage device comprises a register region.

22. A method of limiting a maximum output according to each transmission channel of a mobile communication terminal, the method comprising:
detecting output powers of signals transmitted according to each transmission channel;
calculating differences between the detected output powers and output powers previously stored in a terminal; and
controlling an output power according to each transmission channel by a value obtained by subtracting the calculated difference value from the output power, and then transmitting the signals.
